# EUROPEAN PATENT APPLICATION

(11) **EP 4 625 072 A1**
(43) Date of publication of application: **01.10.2025**
(21) Application number: 25159910.6
(22) Date of filing: 25.02.2025
(51) Int. Cl.: G05B 19/042

(54) **RUNTIME COMPONENT FOR BACKUP AND HIGH AVAILABILITY**

(30) Priority: 29.03.2024 US 202463571788 P; 09.10.2024 US 202418910656
(71) Applicant: Schneider Electric Systems USA, Inc., Foxborough, MA 02035 (US); Schneider Electric Industries SAS, 92500 Rueil Malmaison (FR)
(72) Inventor: Reddy Molakaseema, Sarat Kumar, 2700 Wiener Neustadt (AT); Herrklotz, Ricardo, 2491 Neufeld (AT); Meegan, Kevin, Hove, BN35HG (GB); Lin, Heng-You, Quincy, 02169 (US)
(74) Representative: Friese Goeden Patentanwälte PartGmbB

(57) **Abstract**

A duplex configuration for application state synchronicity. A primary controller actively monitors and controls a plant/process and a secondary controller takes over in case of a failure of the primary controller. Input data is received at respective inputs of the primary controller and the secondary controller. Determining which of the received input data is associated with or should be treated as External Events permits achieving application state synchronicity between the primary controller and the secondary controller by synchronizing the execution of events associated with the same input data.

## Description

### CROSS-REFERENCE TO RELATED APPLICATIONS

This application claims the benefit of U.S. Provisional Patent Application No. 63/571,788, filed March 29, 2024, and U.S. Patent Application No. 18/910,656, filed October 9, 2024.

### BACKGROUND

The need for distributed control topologies has resulted in the development of a programming language standard such as IEC 61499, which is an international standard published by International Electrotechnical Commission dedicated to distributed (event-based) industrial applications. Generally, IEC 61499 defines a generic architecture that enables an application-centric design in which one or more applications, defined by networks of interconnected function blocks, are created for the whole system and subsequently distributed to available devices. All devices within a system are described within a device model and the topology of the system is reflected by the system model. IEC 61499 addresses the topic of a function blocks-based, distributable control application for industrial process measurement and control systems. According to this standard, control application execution is event-driven, where events represent changes in the system's state or conditions, unlike the classical scan-based distributed control systems. The IEC 61499 standard also specifies a set of software components and applications that an implementer of the standard must implement or develop.

Integrated Development Environment (IDE) is an engineering and configuration software application or component that can be used to design and develop function blocks, develop a control application, and maintain and manage devices that run the control application, or at least part of it, that is assigned and downloaded into the devices. Runtime is a software component that can host and run the application/control-loop that is downloaded into the component in accordance with the execution model specified in the 61499 standard.

In the IEC 61499 architectural model, distributable applications are built by interconnecting instances of reusable function block types with appropriate event and data connections in the same manner as designing a circuit board with integrated circuits. Using IEC 61499-compliant software tools, these function blocks can be distributed and then deployed across a network to a runtime component of physical devices (controllers) compliant with IEC 61499. In this manner, distributed control and automation systems are configurable from libraries of reusable IEC 61499-compliant components.

### SUMMARY

Aspects of the present disclosure achieve application state synchronicity between a primary controller (e.g., Active) and a secondary controller (e.g., Backup) controller that are arranged in a duplex configuration by synchronizing the execution of events associated with the same input data. A method embodying aspects of the present disclosure is an efficient, streamlined implementation in software and can be used in different deployment models of an industrial automation system, including as bare metal or embedded deployment as an application on top of operating system and deployment as a container.

In an aspect, a method achieves application state synchronicity between Active and Backup controllers in a duplex configuration, with an Active/Primary controller configured to actively monitor and control a plant/process, and a Backup/Secondary controller configured to take over in case of a failure with the Active/Primary controller. The method includes receiving input data at respective inputs of the Active/Primary controller and the Backup/Secondary controller. The input data has one or more of: data from sensor(s) associated with the plant/process, data received from operator interface(s), and data received from peer controller(s). The method further includes classifying which of the received input data is associated with or should be treated as external events and achieving application state synchronicity between the Active/Primary controller and the Backup/Secondary controller by synchronizing the execution of external events associated with the same input data.

In an aspect, a method of achieving application state synchronicity comprises receiving an event by a primary controller. The primary controller is configured to actively monitor and control at least one process of a plant responsive to the received event. The method also includes determining if the event and input data associated therewith received by the primary controller comprise an asynchronous external event, queuing the external event for execution by the primary controller, and transferring the external event to a secondary controller in a duplex configuration with the primary controller; and queuing the external event for synchronized execution by the secondary controller. The secondary controller is configured to, responsive to a failure of the primary controller, actively monitor and control the at least one process of the plant. The method further comprises, in response to the external event and the associated input data received by the primary and secondary controllers, synchronizing execution of the external event by the primary and secondary controllers to achieve application state synchronicity between the primary controller and the secondary controller. According to one or more embodiments, the execution of the external event leads to a series of function blocks being scheduled and their algorithms executed, which represents the execution of the control loop based on the user's deployed control application.

In another aspect, a system for achieving application state synchronicity comprises a control resource associated with a primary controller and a corresponding control resource associated with a secondary controller in a duplex configuration with the primary controller. The system also includes one or more storage memories coupled to the control resources for storing processor-executable instructions. When executed, the instructions configure the control resources for receiving an event by the primary controller, determining if the event and input data associated therewith received by the primary controller comprise an asynchronous external event, queuing the external event for execution by the primary controller, and queuing the external event for synchronized execution by the secondary controller. In response to the external event and the associated input data received by the primary and secondary controllers, instructions configure the control resources for synchronizing execution of the external event by the primary and secondary controllers to achieve application state synchronicity between the primary controller and the secondary controller. According to one or more embodiments, the execution of the external event leads to a series of function blocks being scheduled and their algorithms executed, which represents the execution of the control loop based on the user's deployed control application.

In yet another aspect, a process control system for achieving application state synchronicity comprises a primary controller and a secondary controller in a duplex configuration. The system also includes one or more storage memories coupled to the primary and secondary controllers storing processor-executable instructions. When executed, the instructions configure the controllers for receiving an event by the primary controller, determining if the event and input data associated therewith received by the primary controller comprise an asynchronous external event, queuing the external event for execution by the primary controller, and queuing the external event for synchronized execution by the secondary controller. In response to the external event and the associated input data received by the primary and secondary controllers, instructions configure the controllers for synchronizing execution of the external event by the primary and secondary controllers to achieve application state synchronicity between the primary controller and the secondary controller. According to one or more embodiments, the execution of the external event leads to a series of function blocks being scheduled and their algorithms executed, which represents the execution of the control loop based on the user's deployed control application.

Other objects and features of the present invention will be in part apparent and in part pointed out herein.

### BRIEF DESCRIPTION OF THE DRAWINGS

FIG. 1 illustrates a process control system according to an embodiment.
FIG. 2 illustrates an industrial automation system according to an embodiment.
FIG. 3 illustrates a backup method of high availability according to an embodiment.
FIG. 4A illustrates an example IEC 61499 function block and FIG. 4B illustrates an example IEC 61499 function block network according to an embodiment.
FIG. 5 illustrates event synchronization between a primary controller and a secondary controller according to an embodiment.
FIG. 6 illustrates an exemplary simplex configuration for event execution according to an embodiment.
FIG. 7 illustrates an exemplary duplex configuration for event execution according to an embodiment.
FIGS. 8A and 8B and FIGS. 8C and 8D illustrate examples of sync initiation in a duplex configuration each according to an embodiment.
FIG. 9 illustrates an example of tracking and monitoring event synchronization in a duplex configuration according to an embodiment.
FIG. 10A illustrates an example of queue handling on the secondary controller during failover in a duplex configuration according to an embodiment.
FIG. 10B illustrates an example of a change in event order during failover in a duplex configuration according to an embodiment.

Corresponding reference characters indicate corresponding parts throughout the drawings.

### DETAILED DESCRIPTION

The features and other details of the concepts, systems, and techniques sought to be protected herein will now be more particularly described. It will be understood that any specific embodiments described herein are shown by way of illustration and not as limitations of the disclosure and the concepts described herein. Features of the subject matter described herein can be employed in various embodiments without departing from the scope of the concepts sought to be protected.

As described above, in the IEC 61499 standard, control application execution is event-driven, where events represent changes in the system's state or conditions. In accordance with IEC 61499, an "event" is an instantaneous occurrence that is significant to scheduling the execution of a function block/algorithm. Aspects of the present disclosure provide a runtime solution in which External Events represent the asynchronous excitement/changes to the execution of control logic, such as input/output (IO) value changes, operator setpoint updates from a Human-Machine Interface (HMI), data changes from subscribed peer controllers, or the like, trigger the execution of function blocks within a controller. In an embodiment, even events that are generated by internal Timer Objects are treated as External Events. In this regard, External Events are a subset of events as defined by IEC 61499. Synchronicity is with respect to the execution of control logic (i.e., scheduling and execution of a series of function block (FB) instances). This is in contrast to traditional scan-based execution: read input - execute logic - write output. In IEC 61131, for instance, "event" is evaluated synchronously to the execution of logic, that is always in the "read input" step before logic execution.

According to aspects of the present disclosure, an External Event represents an asynchronous excitement/change to the environment of the device (e.g., a timer has expired, a network packet has been received from the HMI) and is thus queued asynchronously to the resource where the function block (i.e., control logic) will be executed later. A runtime subsystem (e.g., OPCUA server, MODBUS client) detecting that an OPCUA client request has been received, or receiving a MODBUS response, from the network via network interface controller and OS networking stack will also queue an External Event.

The present disclosure relates to methods of achieving application state synchronicity between a primary controller (e.g., Active) and a secondary controller (e.g., Backup) in a duplex configuration, by synchronizing the execution of External Events associated with same input data, which represents the new state of the system or condition. The order for which environment change/excitement (and hence the order an External Event is queued and executed on the primary device) and the associated input values detected on the primary are considered the only truth (until the point of a failure on the primary). If the primary and secondary differ in order of excitement, or the input values, the primary's belief always take precedence. When identical applications on two controllers receive the same External Event with the same input data, the resulting state of their function blocks will be identical after execution. Synchronizing External Events with associated input data from primary to secondary controllers ensures identical control application states at the end of execution.

In an embodiment, the synchronized execution is based on the order of asynchronous external events are queued, not temporal. For instance, the external event on the secondary controller can execute seconds (e.g., 2 seconds) after the same event is executed on the primary controller, but aspects of the present disclosure guarantee eventual state synchronicity after all events have been executed. According to one or more embodiments, the execution of the external event leads to a series of function blocks being scheduled and their algorithms executed, which represents the execution of the control loop based on the user's deployed control application.

Referring now to the drawings, aspects of the present disclosure permit defining and modeling of assets and generating a library of such asset models for an industrial system. The asset library contains programming elements (e.g., basic and composite blocks) required to build the assets. In an embodiment, these programming elements are defined according to a distributed control programming standard such as IEC 61499. The models indicate relationships (e.g., different physical model levels) between physical assets and control assets, which permit mapping the asset library to physical devices and control language or narrative.

Moreover, aspects of the present disclosure provide the ability to design and simulate operation of the industrial system using the asset model library, which permits evaluation of the simulated operation to identify potential improvements to a proposed system design.

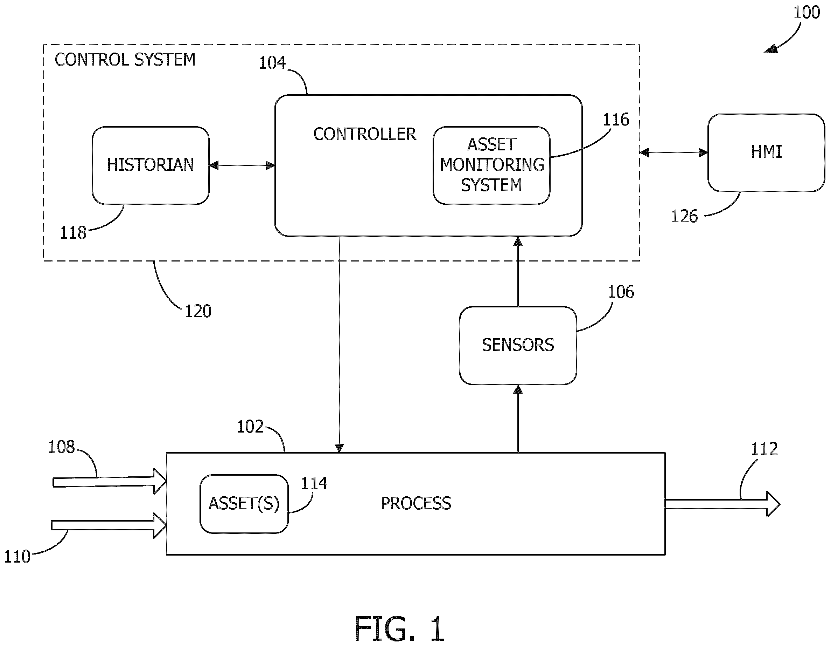

FIG. 1 displays the basic structure of an example process control system 100. In an embodiment, at least one process 102 is communicatively connected to a controller 104 and sensors 106. The process 102 has inputs 108 and 110 that comprise the necessary inputs for the process to create an output 112. In an embodiment, the input 108 includes energy for running process 102 and input 110 includes physical or chemical raw materials for use in process 102. The output 112 comprises physical or chemical products from the process 102 or energy production in the form of electricity or the like.

The controller 104 sends data to the at least one process 102 to direct the operations thereof according to the goals of controller 104. The data sent comprises commands that operate various types of process elements, equipment, or assets 114, of the process 102, such as pumps, motors, valves, actuators, electrostatic precipitators, electrolyzers, vibrators, heaters, or the like. The asset 114 may be any mechanical, chemical, electrical, biological, or combined mechanism or set of mechanisms that is used to convert energy and materials into value added products or production. The sensors 106 monitor process 102 at various points and gather data from those points. The sensors 106 then send the data gathered to controller 104. Based on the gathered data, controller 104 can send additional commands to process 102. In this way, the system 100 forms a control feedback loop, where controller 104 reacts to changes in process 102 as observed by sensors 106. Different actions carried out by process 102 according to the commands of controller 104 may change the data being gathered by sensors 106, thus causing further adjustments by controller 104 in response to those changes. By implementing this control feedback loop, the at least one process 102 can be controlled by the controller 104 in an efficient and effective manner.

To ensure safe operation, controller 104 includes one or more condition or asset monitoring systems 116 responsive to sensors 106 for collecting, process measurements such as temperatures, flow rates, pressures, chemical compositions, stream properties, vibration analysis, motor current signature analysis, ultrasonic analysis, thermal analysis, and the like on critical assets 114. In the illustrated embodiment, system 100 also includes a historian 118 configured to capture and store industrial data, including process(es), alarm(s), and event history data.

As shown in FIG. 1, a distributed control system 120, including controller 104, operates in conjunction with a human-machine interface (HMI) 126. The HMI 126 is an input-output device that presents process information to a human operator. The control system 120 links to HMI 126 for providing maintenance procedures, detailed schematics, logistic information, trend data, diagnostic data, configuration data transfer, and the like for a specific sensor or machine. In an embodiment, HMI 126 comprises a personal computer, smartphone, tablet, touchscreen HMI device, or the like. Although illustrated remotely from the various industrial assets 114 (e.g., in a control room), it is to be understood that HMI 126 could be hosted on the device itself.

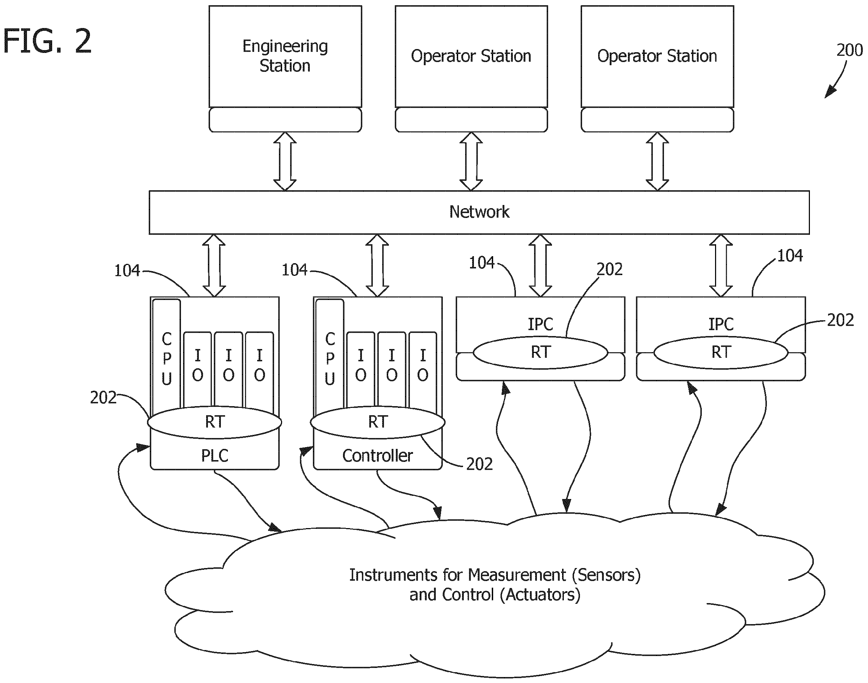

FIG. 2 illustrates an industrial automation system 200 implementing the IEC 61499 standard. As is known in the art, an IEC-61499 control application is a collection of function blocks that are interconnected forming a function block network. A runtime (RT) software component 202 in the illustrated embodiment is designed and implemented as set of software services that host and execute the IEC 61499 control application.

The RT software component 202 can be run on any computing device or a node with a processor and memory (with adequate processing power and memory size). For example, as shown in FIG. 2, in industrial control, it is run in programmable logic controllers (PLCs), controllers used in a distributed control system (DCS) and industrial personal computers (IPCs), referred to generally in FIG. 2 as controller 104. The RT software component 202 leverages the services provided by the host operating system of the device or compute node to perform its duties like communicating with other participating entities in the system, for storing and retrieval of data, etc.

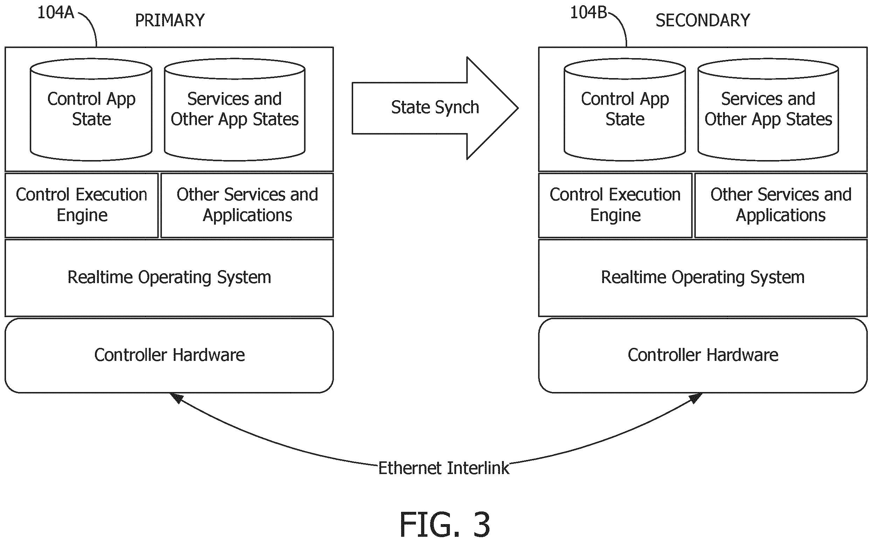

Referring now to FIG. 3, industry commonly requests that vendors of industrial control systems provide highly available, fault-tolerant control systems that ensure continuous operation even in the event of faults or failures. To achieve this, such vendors often implement active and backup mechanisms in their controllers. A highly available (HA) controller is typically designed in a duplex configuration, having a pair of individual controllers 104 operating in an active/primary mode and in a backup mode, respectively. A primary controller 104A of the pair actively monitors and controls the plant/process, while a secondary, or backup, controller 104B of the pair waits to take over in case of a failure. Synchronization of the control application state from the primary controller 104A to the secondary controller 104B is crucial to ensure seamless transition and avoid undesired changes in plant/process control. This synchronization may involve full or partial state synchronization and occurs at specific intervals depending on the design and implementation. Additionally, in many designs such as Hot Standby redundancy, the complete state of each controller 104A, 104B, including the control application state, services state, and underlying platform state, is synchronized. Most of these solutions are tightly coupled to the underlying hardware making them hard to be portable to other hardware.

A high-speed gigabit Ethernet interlink, for example, is used for ultra quick and efficient synchronization of state from the primary controller to the secondary controller. Preferably, complete bandwidth of the interlink permits achieving the expected performance. In an embodiment, the interlink is a dedicated and direct interlink between the two controllers 104A, 104B and an interlink protocol used for event synchronization and other data synchronizations without a switched network. For example, an External Event is sent via an interlink to the partner/secondary device, which receive the External Event and queues it accordingly. The External Events are then executed on both devices, primary and secondary.

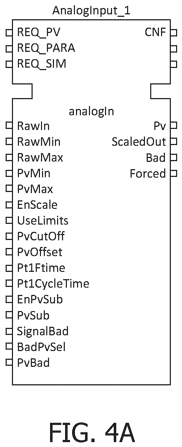

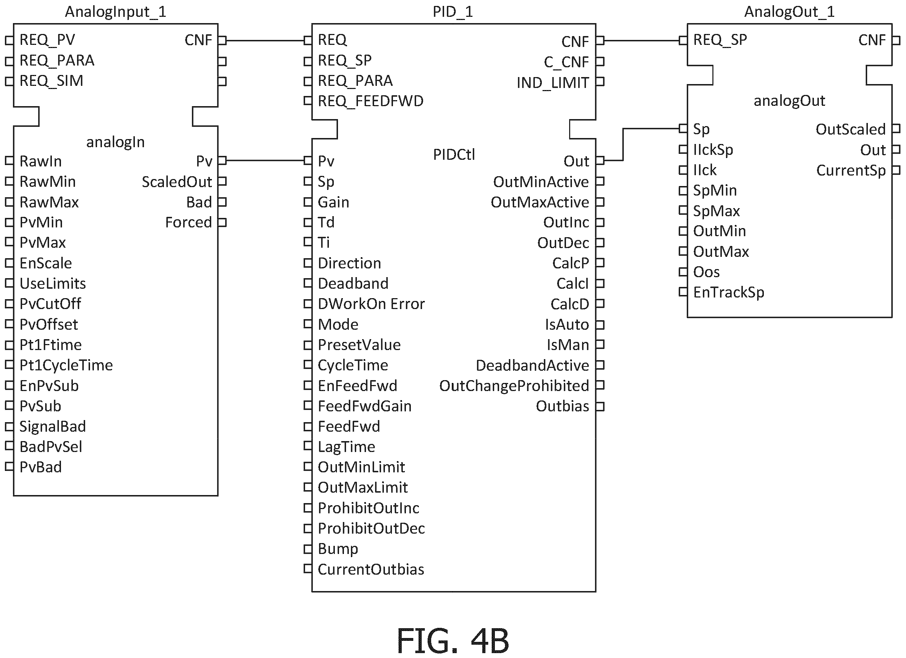

FIG. 4A illustrates an example IEC 61499 Function Block (FB). As is known to those of ordinary skill in the art, a function block is, an encapsulation of code/algorithm with an input interface and an output interface analogous to a class/object in Object Oriented Programming in software. An interface is a set of events and data such that events and data on the same interface are always selectively associated with each other. FIG. 4B illustrates an example IEC 61499 Function Block Network (FB Network) in which a set of function blocks are connected to each through event connections. An event connection always has output event of a function block instance as source and input event of another function block as destination.

A control loop is the fundamental building block of a control system in general and of an industrial control system, such as process control system 100, in particular. It consists of the process sensor, the controller function, and the final control element (FCE) that controls the process necessary to automatically adjust the value of a measured process variable (PV) to equal the value of a desired set-point (SP). In an embodiment, a control Loop implementation comprises an IEC 61499 FB Network. For example, a simple control loop implemented as an IEC 61499 control application includes an FB network having three FBs, as shown in the example of FIG. 4B. It will have an Input FB such as an Analog or Discrete input block, a control block such as a PID block, and an output block such as an Analog or Discrete output block. In the example control loop, "REQ_PV" is generated when the sensor providing the analog input value reports a change. This then leads to triggering of below chain of events, leading to the execution of the complete control loop which is nothing but an IEC61499 FB network. For example:
"CNF on Analoglnput_1" → "REQ on PID_1" → "CNF on PID_1" → "REQ_SP on AnalogOutput_1" → "CNF on AnalogOutput_1"

External events are not represented by any event on the interface of any FB and may be considered "perpendicular" to the FB/FB Network (event connection from one FB to the next). They allow function blocks to be scheduled and executed without any input event of the targeted FB being queued/executed. In this manner, they are "independent" from the control loop/connection of event. In other words, the FB can be scheduled and executed (usually resulting in an output event being fired, without an upstream FB being executed or the FB being connected to an upstream FB at all.

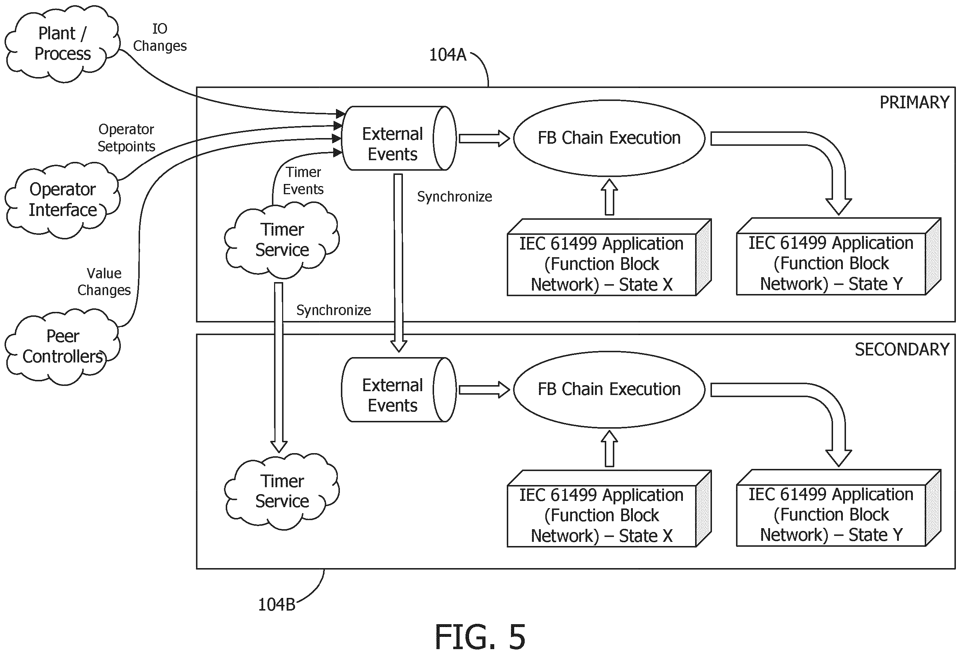

Referring now to FIG. 5, control application execution is event-driven in accordance with the IEC 61499 standard, where events represent changes in the system's state or conditions. External Events, such as IO value changes, operator setpoint updates from an HMI, or data changes from subscribed peer controllers, trigger the execution of function blocks within the controller. Even events generated by internal Timer Objects are treated as External Events according to an embodiment. When identical applications on two controllers (e.g., controllers 104A and 104B) receive and execute the same External Event with the same input data, in the same order relative to other External Events, the resulting state of their function blocks will be identical after execution. Synchronizing External Events with associated input data from primary to secondary controllers ensures identical control application states at the end of execution.

According to aspects of the present disclosure, application state synchronicity is achieved between Active (e.g., primary controller 104A) and Backup (e.g., secondary controller 104B) in a duplex configuration by synchronizing the execution of events associated with same input data. In an embodiment, an implementation in software can be used in different deployment models of RT software component 202, such as bare metal or embedded deployment as an application on top of the operating system and deployment as a container for synchronizing the execution of events. Although referred to as receiving, the primary does not receive an External Event. Instead, the External Event (along with input data) is sent to the secondary and synchronized such that it is executed on both devices. Since both devices execute the same event in the same order with the same input data, any calculated output will be the same, which achieves state synchronicity.

In addition to the synchronized execution of events, additional methods embodying aspects of the present disclosure are implemented to achieve the overall system high availability, including:
▪ Designating one of the controllers 104 as Preferred Primary - As part of a duplex configuration, one of the controllers 104 is designated as a preferred primary. This is used to avoid contention during a synchronized start, i.e., when both controllers 104A, 104B are started together. In an embodiment, a preferred designation is only used when a boot project is involved and the two controllers are powered up after a power cycle. When connected to the engineering tool and a user is actively deploying/starting the controllers, the user can configure which device will be the "primary" after reaching run state.
▪ Synchronous start of the duplex controllers 104 - When both the controllers 104A, 104B are started together, always the preferred primary (e.g., controller 104A) takes the lead and makes sure that its partner(e.g., controller 104B) closely follows it until they go into a run mode synchronously. Another scenario that requires "remarry" is when a device has failed (so a failover has happened) and the failed device is replaced.
▪ Unsynchronous start - The primary controller 104A is started first and brought to a run state and later the secondary controller 104B is started. In this manner, primary controller 104A, which is already running, educates the joining controller 104B by taking a tiny pause (blackout period) and synchronizing its current application state, i.e., the state and input/output of each and every FB instance, to the joining controller 104B during this pause. Then the two controllers 104A, 104B get into a synchronous run at an agreed absolute time.
▪ Synchronization of IO data and communication handling - The primary controller 104A actively scans the IO devices and synchronizes the data to the secondary. controller 104B. Even though secondary controller 104B does not actively scan the IO data, it still establishes required connections and communications with the IO devices and maintain Keep-Alive messages to make sure it can start active scanning momentarily after it takes over the primary role.
▪ Staging events on Secondary - The events are generated on secondary controller 104B as well, however they are staged in a separate queue. Events in the staging queue are removed when they "match" the same event that is synchronized from primary controller 104A. This ensures that events generated during failover are not lost and the secondary executes controller 104B these after it takes over.
▪ Tight (less than a millisecond precision) time synchronization - The system clock and the monotonic clock of the two controllers 104 in the duplex configuration are maintained in tight synchronization for the timer object events to be in sync. For example, an NTP based time synchronization method is used to synchronize the time of two controllers 104.

According to a specific embodiment, the two controllers 104 use the same platform (i.e., CPU architecture and operating system). It is to be understood that aspects of the present disclosure are hardware agnostic and do not require having the same platform. Use of the same OS (and their versions) would provide easier implementation and verification. Also, output of computation on identical processors with the same input data is expected to be identical. This is due to, for example, the floating point calculation might be calculated differently under different CPU architecture, which would lead to a divergence of application state even if the same FB is executed on both controllers. Another consideration is, for example, different endianness means binary data is interpreted differently and again can result in different calculations. Alternatively, two processors having the same precision irrespective of whether they are identical (same architecture and from same vendor) or not, would permit using non-identical processors.

A controller 104 according to an embodiment that is used to replace a faulty controller in the duplex configuration is commissioned with the same duplex configuration i.e., the same IP address and same cyber security configuration etc. as the faulty controller to promote interoperability.

Advantageously, a runtime component 202 embodying aspects of the present disclosure permits higher performance with lower CPU and network cost compared to a traditional scan-based PLC high availability solution. When the process or plant is in a steady state having few changes in process, synchronization of events consumes little CPU time and less network bandwidth in comparison to synchronization of either a complete state of the controller or just the application state or just the sub state of the application. For this reason, the runtime component 202 is suitable for use in systems with low CPU powered controllers and limited network bandwidth in comparison to existing solutions.

In addition, aspects of the present disclosure permit tiny switchover time. Switchover time is the time taken for switchover of control function from a current active or primary controller 104A to the standby or secondary controller 104B. In an embodiment, the runtime component 202 provides a switchover time in, for example, tens of milliseconds. The switchover could be user requested, or it could be an automatic switchover because the current active or primary controller 104A has failed or faulted. Note that the failure or fault detection time is not part of the switchover time.

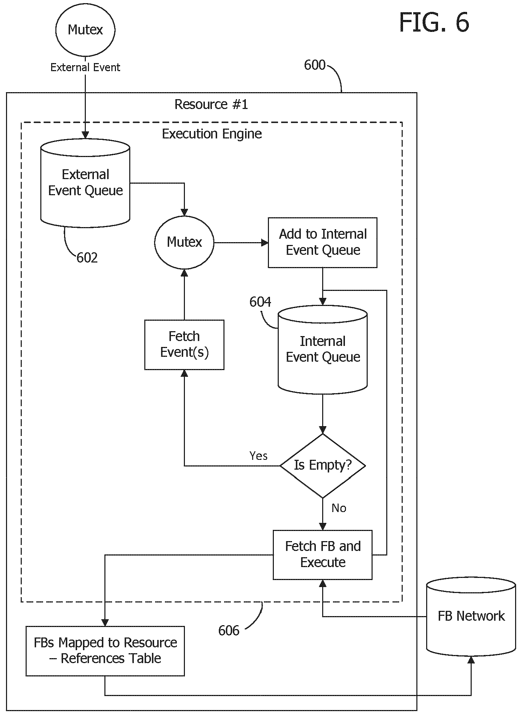

FIG. 6 illustrates an instance of the runtime software component 202 representing a logical device in a simplex configuration for event execution. The IEC 61499 device model consists of resources and each resource 600 is assigned a set of blocks that it must execute in its context. In accordance with one or more embodiments, the IEC 61499 resource 600 is modeled as set of two event queues (an External Event queue 602 and an internal event queue 604) and an execution thread (hereafter referred as an execution engine 606). In an embodiment, internal events consist of those events as defined in IEC 61499 that are reactive or deterministic and that do not queue and execute asynchronously.

In accordance with an embodiment of a runtime implementation, at startup, both event queues 602, 604 are empty. When an External Event is generated, it is added to the External Event queue 602. If the External Event queue 602 is not empty, execution engine 606 fetches one External Event and adds it to internal event queue 604. On the other hand, if the External Event queue 602 is empty, the execution engine 606 keeps checking for availability of an event. If the internal event queue 604 is not empty, the execution engine 606 fetches one event from the queue and schedules it for execution. On the other hand, if the internal event queue 604 is empty, the execution engine 606 checks the External Event queue 602. Execution of an event comprises execution of function block code pointed by the event. When a function block is executed, it generates events with associated data as an output. If the generated events are connecting with event connections to function blocks mapped to the current device, they get added into the internal event queue 604. This is how a chain of function blocks gets executed because of an External Event execution. If the generated events are pointing to function blocks mapped to a different device, then they are sent to the corresponding device through a peer-to-peer communication interface.

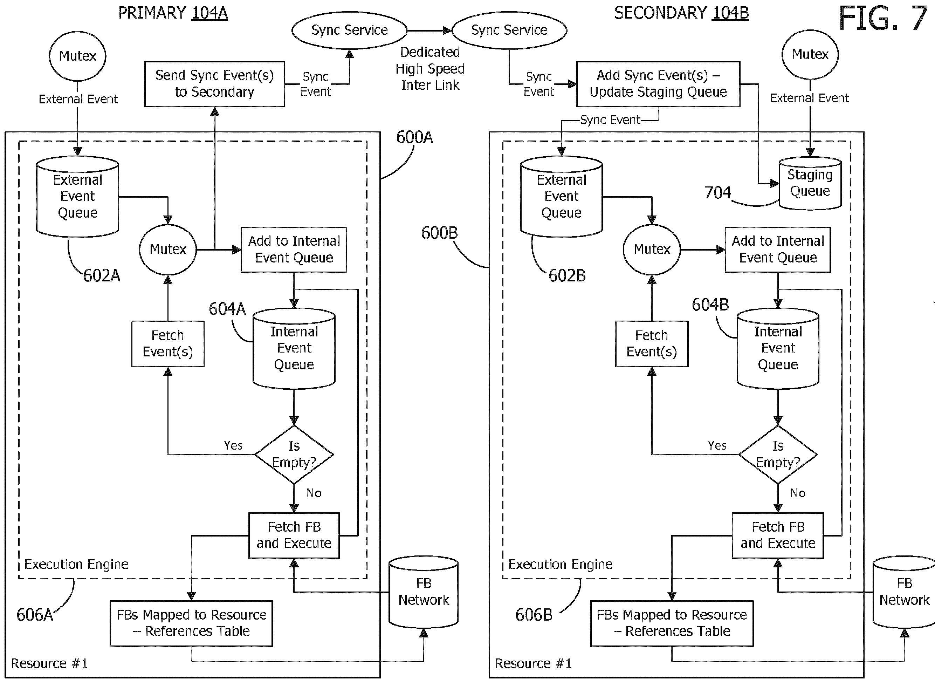

Referring now to FIG. 7, a duplex configuration for event synchronization in accordance with one or more embodiments is shown. The sync event messages are sent only in one direction, namely, from the current primary instance to the secondary instance. According to aspects of the present disclosure, a primary resource 600A is assumed to be always correct and a secondary resource 600B simply follows it in terms of External Event execution. According to one or more embodiments, both primary and secondary resources 600A, 600B employ a new service named "Sync Service" for sending and receiving of Sync Messages. On the primary resource 600A, when the internal event queue 604A is empty, while fetching the External Event from the External Event queue 602A, the execution engine 606A checks whether this event was synchronized to the secondary. If the event was synchronized to the secondary, the execution engine moves the event into the internal event queue. If the event was not synchronized to the secondary resource 600B, all External Events that were not synced to the secondary resource 600B are sent to it as Sync Event Messages through the sync service.

On the secondary resource 600B, a new queue named staging queue 704 is defined and all of the External Events queued on the secondary due to a change/excitement are added to this queue instead of to the External Event queue 602B. When a Sync Event(s) message is/are received from the primary resource 600A, these event(s) is/are added to the External Event queue 602B and the corresponding event(s) in the staging queue 704 are marked as matching with the primary resource 600A. For this reason, the corresponding event(s) in the staging queue 704 will eventually be removed from the queue after the corresponding event execution is finished. This ensure secondary does not execute any duplicate External Event and also provides a way to detect potential fault/failure on either device.

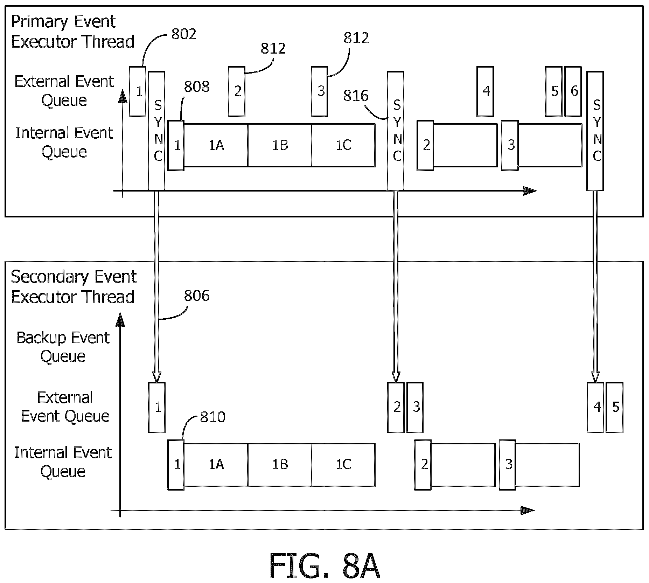

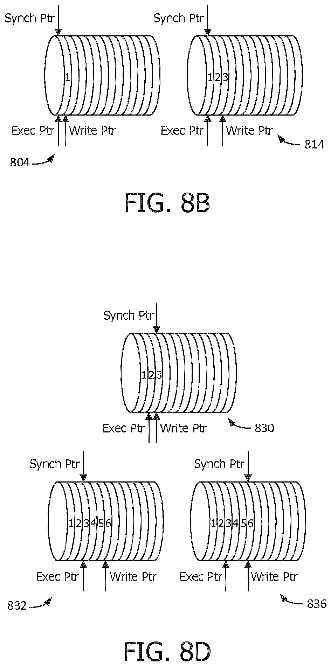

FIGS. 8A and 8B illustrate a first scenario of sync initiation in a duplex configuration each according to an embodiment. Beginning at 802, External Event 1 is added on the primary. Since Exec Pointer (Pos 0) == Sync Pointer (Pos 0), as shown in FIG. 8B at 804, a sync is triggered at 806. All events in the external queue from Sync Pointer until the End Pointer will be transmitted to the secondary as Sync Event Message(s). Proceeding to 808, the primary continues execution of the events. Other events may be added to the internal event queue (1A, 1B, 1C) as a result of the event chain execution. The secondary continues execution at 810 a little later than the primary. At 812, executing new events (2 and 3) enter into the External Event queue. Since Exec Pointer (Pos 1) == Sync Pointer (Pos 1), as shown in FIG. 8B at 814, the next sync is triggered at 816 (similarly to the sync at 806), but it now performs a sync of two events (2 and 3).

In an embodiment, the synchronization from primary to secondary is triggered when the Execution Pointer is about to overtake the Sync Pointer. No execution on the primary or secondary occurs during sync and the event queue overflow happens when the End Pointer overtakes the Sync Pointer (not the Execution Pointer).

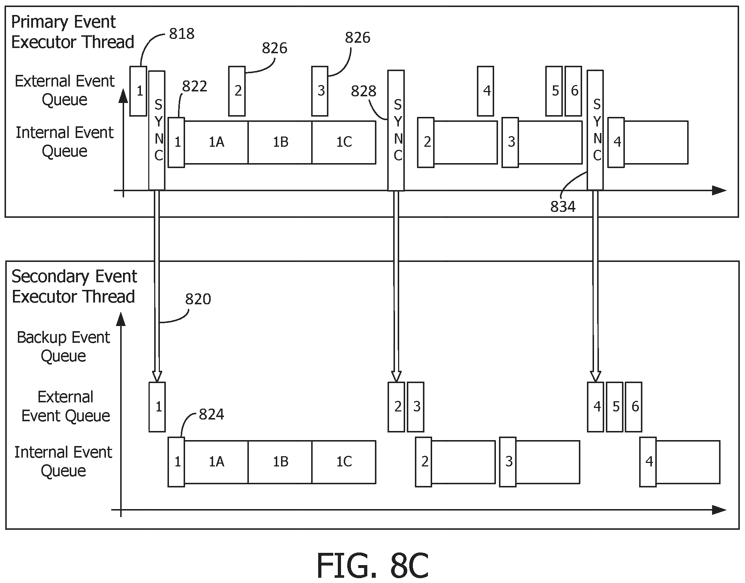

FIGS. 8C and 8D illustrate a second scenario of sync initiation in a duplex configuration each according to an embodiment. Beginning at 818, External Event 1 is added on the primary and a sync is triggered at 820. All events in the external queue from Sync Pointer until the End Pointer will be transmitted to the secondary as Sync Event Message(s). Proceeding to 822, the primary continues execution of the events. Other events may be added to the internal event queue (1A, 1B, 1C) as a result of the event chain execution. the secondary continues execution at 824 a little later than the primary. At 826, executing new events (2 and 3) enter into the External Event queue. The next sync is triggered at 828 (similarly to the sync at 806), but it now performs a sync of two events (Events 2 and 3). While Events 2 and 3 were being executed, as indicated at 830 of FIG. 8D, Events 4, 5, and 6 are added into the External Event queue, as indicated at 832 of FIG. 8D. As the Execution Pointer moves to Event 4 at 834, it now becomes the same as the Sync Pointer, hence a Sync is invoked where it sends all events starting from the Sync Pointer until the End Pointer. That is, events 4, 5, and 6 are sent to the secondary as Sync Event Message(s) as shown in FIG. 8D at 836.

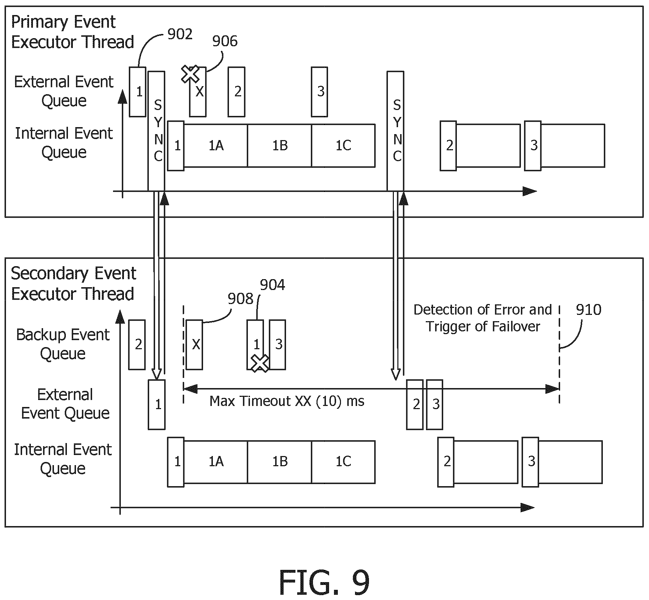

FIG. 9 illustrates an example of tracking and monitoring event synchronization in a duplex configuration according to an embodiment. In the illustrated embodiment, Event 1 at 902 arrived late on the secondary, as indicated at 904, and is already executed because of a Sync Event received from the primary. This is detected using the event tracking information maintained in MAP1 and MAP2. In an embodiment, it is acceptable as it arrived within a timeout period. An Event X at 906 is received only on the secondary, as indicated at 908, and is added to the staging queue, and tracking information is added to MAP1 and MAP2. As shown in FIG. 9, the Event X never arrived as a Sync Event from the Primary and a timeout is detected at 910 using the tracking information in MAP1 and MAP2, indicating that the primary has completely lost the Event X. This potentially indicates a fault has happened on the primary device and is notified to HA diagnostics so a failover decision can be taken.

In an embodiment, two MAP data structures are maintained to track the events getting added to the staging queue and to the External Event queue. In this embodiment, MAP1 is used to keep track of the enqueue time of the event and MAP2 is used to keep track of the arrival of an event into the two queues (i.e., has it arrived only in the staging queue or only in the External Event queue or into both) and the offset where the event is present in the staging queue. If an event has arrived only in the staging queue and never arrived as a sync event from the primary, and a check against the enqueue time indicates that the event remained like this for more than XX(10) ms, then it indicates that this event was lost on the primary. If an event has arrived only in External Event queue as a sync event and never arrived in staging queue, and a check against the enqueue time indicates that the event remained like this for more than XX(10) ms, then it indicates that this event was lost in the secondary. When an event loss is detected, HA diagnostics is notified.

In an event of failover from primary to secondary, all of the events that have arrived in the staging queue but have not arrived at the External Event queue as sync events (events lost on the primary but arrived in the secondary), are copied from the staging queue into the External Event queue and are executed after the secondary assumes the single role. The staging queue offset stored in MAP2 is used for this copying. It is to be understood that a primary role exists when it is in duplex mode, i.e., there is a paired secondary device, and a single role exists when a HA-capable device is running and controlling without a paired partner.

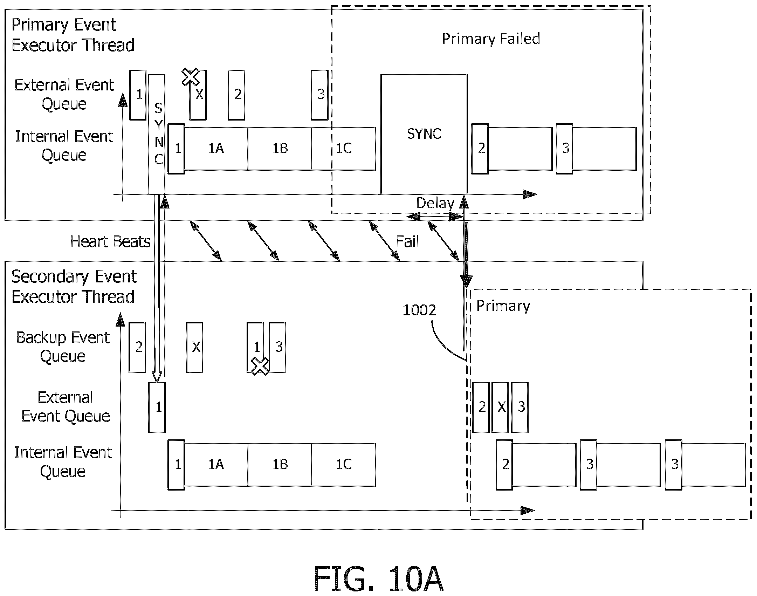

FIG. 10A illustrates an example of queue handling on the secondary controller during failover in a duplex configuration according to an embodiment. Events 2, X, and 3 arrived in the staging queue but are not yet received from the primary as Sync Events. In between, the primary failed. Thus, using the tracking information in MAP1 and MAP2, all of these events are moved at 1002 into the External Event queue prior to the secondary assuming the single role and starts execution.

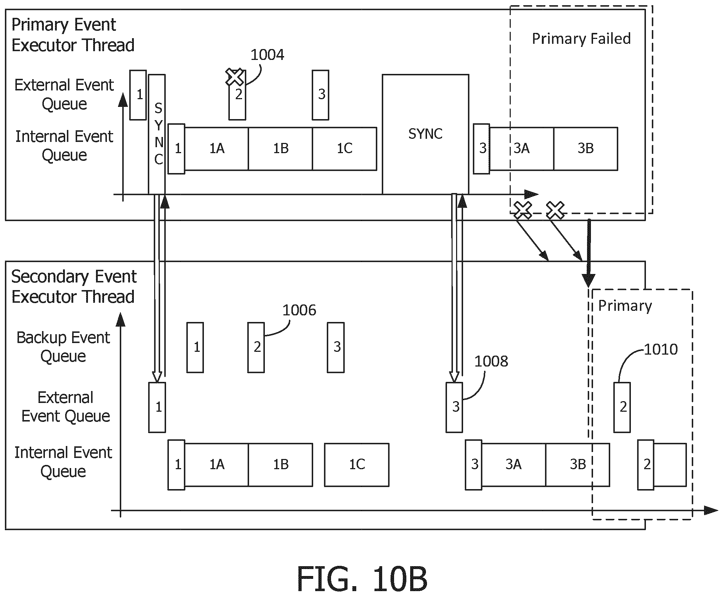

FIG. 10B illustrates an example of a change in event order during failover in a duplex configuration according to an embodiment. Event 2, as indicated at 1004, is received only on the secondary at 1006 and is added to the staging queue, and tracking information added to MAP1 and MAP2. Event 3 is received on both the primary and the secondary at 1008. On the secondary it is added to the staging queue, and tracking information is added to MAP1 and MAP2. Event 3 then arrived on the secondary through a Sync Message from the primary before the primary failed. Tracking information in MAP1 and MAP2 is updated accordingly. Referring to 1010 of FIG. 10B, a change of order of directly related events is shown. Although Event 2 arrived before Event 3 on the secondary, it still gets executed after Event 3 as the Sync Event for Event 2 is pending and not received from the primary. As per the tracking information in MAP1 and MAP2, events are copied into the External Event queue just before the secondary assumes the primary role and starts execution.

A method embodying aspects of the present disclosure achieves application state synchronicity between an Active/Primary controller and a Backup/Secondary controller in a duplex configuration, with the Active/Primary controller configured to actively monitor and control a plant/process, and the Backup/Secondary controller configured to take over in case of a failure with the Active/Primary controller. The method includes receiving input data at respective inputs of the Active/Primary controller and the Backup/Secondary controller. The input data has one or more of: data from sensor(s) associated with the plant/process, data received from operator interface(s), and data received from peer controller(s). The method further includes classifying which of the received input data is associated with or should be treated as External Events and achieving application state synchronicity between the Active/Primary controller and the Backup/Secondary controller by synchronizing the execution of events associated with the same input data.

Alternative or additionally, further aspects of the present disclosure include a containerized Active/Backup controller, Active and Backup controllers in a duplex configuration that do not need a dedicated and direct interlink between them, Active and Backup controllers in a duplex configuration with diverse hardware platforms, Active and Backup controllers in a duplex configuration with diverse operating systems, and Active and Backup controllers in a duplex configuration. Advantageously, aspects of the present disclosure provide a HA industrial automation system that has very low coupling/dependency on the hardware, as well as a HA industrial automation based on softPLC.

Embodiments of the present disclosure may comprise a special purpose computer including a variety of computer hardware, as described in greater detail herein.

For purposes of illustration, programs and other executable program components may be shown as discrete blocks. It is recognized, however, that such programs and components reside at various times in different storage components of a computing device, and are executed by a data processor(s) of the device.

Although described in connection with an example computing system environment, embodiments of the aspects of the invention are operational with other special purpose computing system environments or configurations. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices.

In operation, processors, computers and/or servers may execute the processor-executable instructions (e.g., software, firmware, and/or hardware) such as those illustrated herein to implement aspects of the invention.

Embodiments may be implemented with processor-executable instructions. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the invention.

When introducing elements of the invention or embodiments thereof, the articles "a," "an," "the," and "said" are intended to mean that there are one or more of the elements. The terms "comprising," "including," and "having" are intended to be inclusive and mean that there may be additional elements other than the listed elements.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively, or in addition, a component may be implemented by several components.

The above description illustrates embodiments by way of example and not by way of limitation. This description enables one skilled in the art to make and use aspects of the invention, and describes several embodiments, adaptations, variations, alternatives and uses of the aspects of the invention, including what is presently believed to be the best mode of carrying out the aspects of the invention. Additionally, it is to be understood that the aspects of the invention are not limited in its application to the details of construction and the arrangement of components set forth in the following description or illustrated in the drawings. The aspects of the invention are capable of other embodiments and of being practiced or carried out in various ways. Also, it will be understood that the phraseology and terminology used herein is for the purpose of description and should not be regarded as limiting.

It will be apparent that modifications and variations are possible without departing from the scope of the invention defined in the appended claims. As various changes could be made in the above constructions and methods without departing from the scope of the invention, it is intended that all matter contained in the above description and shown in the accompanying drawings shall be interpreted as illustrative and not in a limiting sense.

In view of the above, it will be seen that several advantages of the aspects of the invention are achieved and other advantageous results attained.

Accordingly, the present invention may also be described as follows, optionally in combination with one or more of the above-mentioned features of the present invention: A duplex configuration for application state synchronicity. A primary controller actively monitors and controls a plant/process and a secondary controller takes over in case of a failure of the primary controller. Input data is received at respective inputs of the primary controller and the secondary controller. Determining which of the received input data is associated with or should be treated as External Events permits achieving application state synchronicity between the primary controller and the secondary controller by synchronizing the execution of events associated with the same input data.

## Claims

1. Method of achieving application state synchronicity comprising:
receiving an event by a primary controller, the primary controller configured to actively monitor and control at least one process of a plant responsive to the received event;
determining if the event and input data associated therewith received by the primary controller comprise an asynchronous external event;
queuing the external event for execution by the primary controller;
transferring the external event to a secondary controller in a duplex configuration with the primary controller, the secondary controller configured to, responsive to a failure of the primary controller, actively monitor and control the at least one process of the plant;
queuing the external event for synchronized execution by the secondary controller; and
in response to the external event and the associated input data received by the primary and secondary controllers, synchronizing execution of the external event by the primary and secondary controllers to achieve application state synchronicity between the primary controller and the secondary controller.

2. Method as set forth in claim 1, wherein the input data associated with the external event includes one or more of input/output (IO) value changes, operator setpoint updates from a Human-Machine Interface, data changes from a subscribed peer controller, and events generated by internal Timer Objects.

3. Method as set forth in claim 1 or claim 2, wherein synchronizing execution of the external event includes:
triggering execution of one or more function blocks within a control resource of the primary controller and a corresponding control resource of the secondary controller in response to the external event; optionally
maintaining identical control application states at the end of execution.

4. Method as set forth in any one of claims 1 to 3, further comprising:
actively scanning, by the primary controller, one or more IO devices and synchronizing data from the IO devices to the secondary controller; optionally
actively scanning, by the secondary controller, the one or more IO devices after taking over a primary role from the primary controller.

5. Method as set forth in any one of claims 1 to 4, further comprising staging events on the secondary controller in a staging queue separate from an external events queue.

6. Method as set forth in claim 5, further comprising removing events from the staging queue when the same event is synchronized from the primary controller.

7. Method as set forth in any one of claims 1 to 6, wherein queuing the external event for synchronized execution by the secondary controller comprises executing a runtime software component configured to run on one or more of a programmable logic controller (PLC), a controller of a distributed control system (DCS), and an industrial personal computer (IPC).

8. A process control system for achieving application state synchronicity comprising:
a primary controller;
a secondary controller; and
one or more storage memories coupled to the primary and secondary controllers, the one or more storage memories storing processor-executable instructions that, when executed by the controllers, cause the process control system to perform the method of any one of claims 1 to 9.

9. A system for achieving application state synchronicity comprising:
a control resource associated with a primary controller, the primary controller configured to actively monitor and control at least one process of a plant;
a corresponding control resource associated with a secondary controller in a duplex configuration with the primary controller, the secondary controller configured to, responsive to a failure of the primary controller, actively monitor and control the at least one process of the plant; and
one or more storage memories coupled to the control resources, the one or more storage memories storing processor-executable instructions that, when executed, configure the control resources for:
receiving an event by the primary controller;
responsive to the event and input data associated therewith received by the primary controller comprising an asynchronous external event, queuing the external event for execution by the primary controller;
transferring the external event to the secondary controller;
queuing the external event for synchronized execution by the secondary controller; and
in response to the external event and the associated input data received by the primary and secondary controllers, synchronizing execution of the external event by the primary and secondary controllers to achieve application state synchronicity between the primary controller and the secondary controller.

10. System as set forth in claim 9, wherein the input data associated with the external event includes one or more of input/output (IO) value changes, operator setpoint updates from a Human-Machine Interface, data changes from a subscribed peer controller, and events generated by internal Timer Objects.

11. System as set forth in claim 9 or claim 10, wherein synchronizing execution of the external event includes:
triggering execution of one or more function blocks within the control resource of the primary controller and the corresponding control resource of the secondary controller in response to the external event; optionally
maintaining identical control application states at the end of execution.

12. System as set forth in any one of claims 9 to 11, wherein the one or more storage memories store processor-executable instructions that, when executed:
further configure the control resource of the primary controller for actively scanning one or more IO devices and synchronizing data from the IO devices to the secondary controller; optionally
further configure the control resource of the secondary controller for actively scanning the one or more IO devices after taking over a primary role from the primary controller.

13. System as set forth in any one of claims 9 to 12, further comprising a staging queue for the secondary controller separate from an external events queue, wherein the one or more storage memories store processor-executable instructions that, when executed, further configure the control resource of the secondary controller for staging events on the secondary controller in the staging queue.

14. System as set forth in claim 13, wherein the one or more storage memories store processor-executable instructions that, when executed, further configure the control resource of the secondary controller for removing events from the staging queue when the same event is synchronized from the primary controller.

15. System as set forth in any one of claims 9 to 14, wherein each of the control resources comprises at least one of a programmable logic controller (PLC), a controller of a distributed control system (DCS), and an industrial personal computer (IPC), and wherein queuing the external event for synchronized execution by the secondary controller comprises executing a runtime software component on at least one of the control resources.
